# FASCICULE DE BREVET EUROPEEN

(11) **EP 2 831 829 B1**
(45) Date de publication et mention de la délivrance du brevet: **21.06.2017**
(21) Numéro de dépôt: 13719940.2
(22) Date de dépôt: 28.03.2013
(51) Int. Cl.: G06F 21/60, G06Q 30/06

(54) **PROCÉDÉ ET SYSTÈME DE FOURNITURE D'UN TICKET NUMÉRIQUE POUR L'ACCÈS À AU MOINS UN OBJET NUMÉRIQUE**
VERFAHREN UND SYSTEM ZUR BEREITSTELLUNG EINES DIGITALEN TICKETS FÜR DEN ZUGRIFF AUF ZUMINDEST EIN DIGITALES OBJEKT
METHOD AND SYSTEM FOR PROVIDING A DIGITAL TICKET FOR ACCESS TO AT LEAST ONE DIGITAL OBJECT

(30) Priorité: 29.03.2012 FR 1252875
(43) Date de publication de la demande: 04.02.2015
(73) Titulaire: Orange, 75015 Paris (FR)
(72) Inventeur: LECLERCQ, Thierry, F-75013 Paris (FR); AUVRAY, Vincent, F-50460 Tonneville (FR)
(74) Mandataire: Cabinet Plasseraud
(86) Numéro de dépôt international: PCT/FR2013/050674
(87) Numéro de publication internationale: WO 2013/144514

(56) Documents cités:
- WO-A1-2011/049999
- WO-A2-2008/157732
- US-A1- 2002 099 663
- US-A1- 2003 125 964
- US-A1- 2005 060 640
- US-A1- 2007 174 140
- US-B1- 8 090 802

## Description

L'objet de la présente invention a trait au domaine de la distribution d'objets numériques, et plus précisément au domaine de la mise à disposition d'au moins un objet numérique.

L'objet de la présente invention permet avantageusement le développement de nouveaux services de mise à disposition d'objets numériques en proposant par exemple la possibilité pour une personne de faire un ou plusieurs cadeaux numériques à une tierce personne ; de façon plus générale, l'objet de la présente invention propose une nouvelle approche de la chaîne de distribution des contenus numériques, ceci notamment pour élargir et enrichir l'offre proposée.

Un des objectifs de la présente invention est notamment de permettre à une personne d'acheter un objet numérique, et d'offrir cet objet numérique à une autre personne.

Par objet numérique au sens de l'invention, on entend dans toute la présente description qui suit tout objet numérique contenant des informations numériques telles que par exemple des informations numériques multimédia. A titre d'exemples non limitatifs, les objets numériques au sens de la présente invention sont des contenus numériques comme de la musique, de la vidéo, un livre numérique, un logiciel, une application, etc.

Actuellement, une grande majorité des systèmes de distribution d'objets numériques consiste en des systèmes intégrés et verticaux : dans ce genre de système, la chaîne de distribution des objets numériques est maîtrisée par un seul et même acteur qui gère le contenu numérique de son édition jusqu'à sa distribution.

Bien souvent, les acteurs de ce marché en pleine expansion offrent des systèmes de distribution, dits propriétaires, dans lesquels les objets numériques proposés présentent un format de fichier propre qui ne peut être lu que par un équipement fourni lui aussi par le distributeur.

Ceci empêche d'une part le client de consulter l'objet sur un autre équipement que celui prévu initialement à cet effet ; ceci empêche d'autre part le client d'offrir cet objet numérique à une tierce personne, cette tierce personne ne possédant pas a priori l'équipement adapté.

A titre d'exemple, dans le domaine de la distribution de livres numériques, lorsqu'une personne a choisi une liseuse numérique, l'appareil permettant de lire les livres numériques, et que cette personne a acheté un ou plusieurs livres numériques, celle-ci est liée à ces livres pour toute la durée de vie de ces livres. Si la personne souhaite changer de liseuse, elle risque de perdre l'ensemble des livres qu'elle a acquis ; alternativement, si elle veut lire un de ses livres sur une autre liseuse, elle ne peut pas forcément le faire notamment pour des raisons de format de fichier ou de contrôle d'accès. De la même façon, elle ne peut en aucun cas offrir le ou les livres qu'elle a achetés. Par ailleurs, si les droits attachés à un livre acheté expirent dans un délai imparti à partir de l'achat et que le livre n'a pas été lu dans ce délai, l'accès au contenu (c'est-à-dire la lecture), passé ce délai, n'est plus possible.

D'autres systèmes de distribution d'objets numériques plus ouverts existent. Dans ces systèmes, est dissocié le métier de distributeur d'objets numériques du métier de vendeur d'objets numériques. Dans de tels systèmes, ce sont les objets numériques qui sont échangés entre les distributeurs et les vendeurs. De tels systèmes imposent donc une grande interopérabilité entre les différents acteurs du marché, ceci notamment tant au niveau des fabricants d'équipements de lecture numériques qu'au niveau de l'infrastructure du système de distribution ou du format des fichiers distribués.

Avec de tels systèmes, se pose alors le problème de la sécurité des objets numériques qui sont échangés et distribués : les objets numériques ont une valeur marchande qui suscite généralement l'intérêt des activités de type piratage.

Bien souvent, pour éviter ou tout au moins limiter ce genre d'activités frauduleuses, les systèmes de distribution exploitent des fichiers de gestion des droits numériques, également connus sous l'appellation « DRM » pour « Digital Rights Management ».

Le principe d'une telle gestion des droits repose sur l'exploitation d'un chiffrement de l'oeuvre combiné à un accès conditionnel. Ainsi, le distributeur qui exploite ce contrôle d'accès ne confie la clé de contrôle pour l'accès à l'objet numérique qu'en échange d'une preuve d'achat ou de souscription pour y accéder.

L'accès à l'objet numérique n'est alors autorisé que pour l'équipement ou l'identification logicielle certifiée par le fournisseur. Un tel accès est donc lourd à gérer, ceci aussi bien pour le distributeur que pour l'utilisateur final. Une telle sécurisation rend en outre impossible l'acte de cadeau mentionné précédemment.

En effet, l'intégration d'une telle sécurité exclusivement dans les fichiers DRM crée des problèmes de manipulation chez l'utilisateur notamment quand il change d'équipement de lecture, et empêche certains gestes du consommateur, comme par exemple le cadeau ou le prêt.

Les systèmes de distribution de l'état de la technique présentent donc de nombreux inconvénients, tant pour les distributeurs eux-mêmes que pour le consommateur qui le plus souvent est nomade et est amené à changer d'équipements relativement régulièrement.

De même, les contraintes techniques et sécuritaires des systèmes de distribution de l'état de la technique rendent impossibles des gestes de consommation tels que le cadeau ou encore le prêt. Pour toutes les différentes raisons énoncées ci-dessus, si une personne souhaite acheter un livre numérique pour offrir ce livre à une tierce personne, elle ne peut pas le faire avec les systèmes de distribution d'objets numériques actuels. De la même façon, de telles systèmes rendent impossible le prêt d'objets numériques.

Ceci est regrettable. En effet, dans le domaine de l'édition papier classique, l'acte consistant à offrir un livre est fréquent. Il en est de même dans le domaine de la vidéo ou de l'audio : offrir un CD ou un DVD est un classique en matière de cadeau. Il n'existe malheureusement pas à ce jour de système de distribution d'objets numériques favorisant cet acte de cadeau.

De la même façon, il n'existe pas de système de distribution d'objets numériques permettant d'emprunter ou de louer un objet numérique, comme par exemple dans une bibliothèque ou une vidéothèque.

Le document US 2005/060640 divulgue un système de distribution utilisant les tickets numériques pour permettre l'accès aux objets numériques. Le document US2007/0174140 divulgue un autre système de distribution de contenus numériques basé sur des licences. L'objet de la présente invention vise donc à améliorer la situation actuelle décrite ci-dessus.

A cet effet, l'objet de la présente invention porte sur un procédé de fourniture d'un ticket numérique, ce ticket permettant l'accès à un objet numérique. Dans un mode de réalisation, un premier utilisateur sélectionne au moins un objet numérique auprès d'une librairie numérique.

Cette sélection se fait avantageusement à travers un réseau de communication tel que l'Internet via une interface graphique, par exemple une page web.

Le premier utilisateur peut être muni d'un terminal de communication. Cette sélection est, dans cette variante, réalisée directement via la librairie numérique par l'utilisateur par l'intermédiaire de son terminal de communication. Le premier utilisateur peut, de façon alternative, se rendre dans un lieu de vente, par exemple une librairie ou autre magasin, et sélectionner l'objet numérique à l'aide d'un terminal de communication équipant le lieu de vente.

Suite à cette sélection, le procédé de fourniture comporte une étape de soumission d'une requête auprès d'un serveur de gestion pour obtenir un ticket numérique.

Suite à cette requête, le procédé de fourniture comporte une première étape de génération du ticket numérique par le serveur de gestion. Dans un mode de réalisation particulier, le serveur de gestion mémorise le ticket numérique généré.

Dans un mode de réalisation particulier, ce ticket numérique comporte un code d'identification unique qui est associé audit au moins un objet numérique sélectionné.

Avantageusement, si le premier utilisateur a sélectionné plusieurs objets numériques, le ticket numérique est dans ce cas associé à l'ensemble de ces objets numériques. On retient donc que, de façon générale, un ticket numérique est généré pour les n objets numériques sélectionnés, n étant ici un entier supérieur ou égal à 1.

Ensuite, le procédé de fourniture comporte une première étape de transmission du ticket numérique à destination du premier utilisateur via la librairie numérique.

Le procédé de fourniture comporte en outre une étape d'activation de ce ticket numérique auprès d'un gestionnaire de bibliothèque numérique ; cette activation permet d'accéder audit au moins un objet numérique.

De façon caractéristique, l'utilisation d'un ticket numérique dans le système de distribution décrit ci-dessus permet d'accéder directement ou indirectement audit au moins un objet numérique. En effet, le ticket numérique étant associé à un ou plusieurs objets numériques sélectionnés, il est possible d'accéder à ce ou ces objets numériques en activant le ticket numérique généré par le serveur de gestion.

Ainsi, le procédé de fourniture permet l'accès à un grand nombre d'objets numériques tout en assurant une bonne souplesse dans l'accès et une bonne sécurité des objets numériques.

Cette succession d'étapes techniques, caractéristique de la présente invention, permet donc l'accès aux objets numériques sur un gestionnaire de bibliothèque numérique personnelle.

Comme on peut le comprendre dans ce qui suit, l'utilisation d'un tel ticket numérique dans un système de distribution ouvert permet de s'abstraire des droits d'accès proposés dans les systèmes actuels. Ceci permet une diversification des moyens de consommation des objets numériques en élargissant l'offre possible.

Dans un mode de réalisation particulier, le ticket numérique est cessible. Dans ce cas, le procédé selon la présente invention comporte avantageusement une deuxième étape de transmission au cours de laquelle le premier utilisateur transmet le ticket numérique à un deuxième utilisateur pour permettre au deuxième utilisateur l'accès audit au moins un objet numérique.

Le procédé selon la présente invention favorise ainsi les actes de consommation consistant à offrir un ou plusieurs objets numériques à une tierce personne.

Dans un mode de réalisation particulier, le deuxième utilisateur est muni d'un équipement de lecture numérique qui est un équipement multimédia apte à lire le contenu d'un objet numérique. Un tel équipement peut par exemple être un téléphone mobile du type « Smartphone », un ordinateur, une liseuse numérique, une tablette numérique, ou tous autres types de support multimédia apte à consulter le contenu d'un objet numérique.

On comprend ici que l'étape d'activation est exécutée par le deuxième utilisateur sur son gestionnaire de bibliothèque personnelle. La transmission de ce ticket numérique permet ainsi à une tierce personne d'accéder à un ou plusieurs objets numériques.

On comprend également que le premier utilisateur peut conserver le ticket numérique pour activer le ticket numérique et accéder lui-même au contenu du ou des objets numériques.

Avantageusement, le code d'identification est un code sélectionné parmi une pluralité de codes uniques.

Le serveur de gestion peut stocker ou avoir accès à un ensemble de codes d'identification uniques et, lors de la génération d'un ticket numérique, sélectionner l'un de ces codes, par exemple de façon aléatoire.

Dans un mode de réalisation particulier, ce code est un code alphanumérique qui peut présenter par exemple 16 caractères.

Le ticket numérique peut comporter d'autres éléments d'identification, aptes à permettre ultérieurement d'identifier la transaction. Il peut par exemple comprendre un code alphanumérique de transaction identifiant de façon unique la transaction entre le serveur de gestion et le libraire. Ce code de transaction peut être fourni par tout moyen comme preuve de transaction au premier utilisateur, en complément du ticket numérique.

Avantageusement, ce ticket numérique est généré de telle manière que le code d'identification comporte une donnée d'activation contenant une information relative à un droit d'utilisation dudit au moins un objet numérique sélectionné. En d'autres termes, ce code contient une information qui porte par exemple sur la durée de validité du ticket numérique ou sur la période durant laquelle le ou les objets numériques sont accessibles.

Le ticket numérique peut donc avoir une durée limitée pour être activé.

L'intégration de ce type d'information dans le ticket numérique permet par exemple de rendre possible le remboursement en cas de perte, de non-utilisation ou encore de proposer des offres promotionnelles. Elle rend également possible le prêt d'objets numériques : grâce à cette information, il est possible de rendre consultable le contenu numérique d'un objet numérique pendant une période de temps prédéterminée après son activation.

Avantageusement, le procédé de fourniture comporte une deuxième étape de génération, par le serveur de gestion, d'une donnée de droit de lecture personnel ; cette donnée contient au moins une information relative au droit de lecture de l'objet numérique sélectionné. Dans un mode de réalisation particulier, le serveur de gestion mémorise la donnée de droit de lecture personnel générée.

Dans cette variante avantageuse, ce ne sont pas les objets numériques en tant que tels qui sont échangés, mais les données de droit de lecture personnel. Cette approche pour la distribution des objets numériques s'adapte avantageusement dans un modèle ouvert à trois tiers.

Dans ce cas, et selon une variante, lors de l'étape d'activation, le gestionnaire de bibliothèque numérique soumet le ticket numérique au serveur de gestion pour authentification et, en fonction du résultat de l'authentification, le serveur de gestion renvoie au gestionnaire de bibliothèque numérique la donnée de droit de lecture personnel associée audit au moins un objet numérique sélectionné pour permettre l'accès à ce dit au moins un objet numérique sélectionné.

Cet accès se fait via le serveur de distribution d'objets numériques. C'est en effet un serveur de distribution d'objets numériques qui stocke les objets numériques en tant que tels qui permet, en fonction de la donnée de droit de lecture personnel, la distribution de la ou des objets numériques associés au ticket numérique.

Ainsi, on comprend que, selon l'architecture proposée ici, les distributeurs d'objets numériques, dits les e-distributeurs, produisent en accord avec les éditeurs des contenus numériques ; les librairies numériques, dites les e-librairies, s'occupent eux de la commercialisation des objets numériques ; et le serveur de gestion gère les droits relatifs aux différents objets numériques et régule l'accès à ces objets notamment en gérant les droits de lecture et en gérant et vérifiant les tickets numériques.

Selon cette variante, les données de droit de lecture personnel et le ticket numérique sont à la base de la gestion, de la distribution, de la sécurité, et de la facturation entre les acteurs de la chaine de distribution des objets numériques.

Dans un mode de réalisation particulier, lors de l'étape d'activation, le serveur de gestion vérifie la validité de la donnée d'activation ; le serveur de gestion vérifie notamment la validité de l'information relative au droit d'utilisation de l'objet numérique sélectionné.

En d'autres termes, selon cette variante, pour accéder au contenu de l'objet numérique sélectionné, il suffit de jouer son ticket numérique auprès du serveur de gestion via le gestionnaire de bibliothèque numérique.

Après vérification et validation du ticket (et notamment de la donnée d'activation) par le serveur de gestion, le serveur de gestion délivre à l'utilisateur final le droit de lecture personnel ; ce droit doit ensuite être activé. Suite à cette activation, le gestionnaire de bibliothèque numérique reçoit de la part d'un distributeur numérique le ou les objets numériques sélectionnés.

Dans cette variante, l'activation du ticket numérique permet donc d'obtenir le droit de lecture personnel relatif à l'objet numérique sélectionné.

L'utilisation d'un ticket numérique tel que décrit ci-dessus s'intègre parfaitement dans une architecture de distribution dite ouverte à trois tiers, et permet un élargissement des modes consommation des objets numériques.

Corrélativement, l'objet de la présente invention porte sur un programme d'ordinateur qui comporte des instructions adaptées pour l'exécution des étapes du procédé tel que décrit ci-dessus, ceci notamment lorsque le programme d'ordinateur est exécuté par un ordinateur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

De même, l'objet de la présente invention porte sur un support d'enregistrement lisible par un ordinateur sur lequel est enregistré un programme d'ordinateur comprenant des instructions pour l'exécution des étapes du procédé tel que décrit ci-dessus.

D'une part, le support d'enregistrement peut être n'importe quel entité ou dispositif capable de stocker le programme. Par exemple, le support peut comporter un moyen de stockage, tel qu'une mémoire ROM, par exemple un CD-ROM ou une mémoire ROM de type circuit microélectronique, ou encore un moyen d'enregistrement magnétique, par exemple une disquette de type « floppy disc » ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

L'objet de la présente porte également sur le système pour la mise en oeuvre du procédé décrit ci-dessus. Plus précisément, l'objet de la présente porte sur un système de fourniture d'un ticket numérique permettant l'accès à au moins un objet numérique.

Le système selon la présente invention comporte au moins une librairie numérique, un serveur de gestion, et au moins un gestionnaire de bibliothèque numérique.

Selon la présente invention, la librairie numérique comprend un moyen de sélection qui est configuré pour permettre la sélection par un premier utilisateur d'au moins un objet numérique.

La librairie numérique comprend en outre un moyen de création et de soumission de requête qui est configuré pour permettre la création puis la soumission d'une requête auprès du serveur de gestion. Cette requête contient un message dans lequel la librairie requiert au serveur de gestion la génération d'un ticket numérique.

Selon la présente invention, le serveur de gestion comprend un premier moyen de génération qui est configuré pour générer ce ticket numérique. Dans un mode de réalisation particulier, le premier moyen de génération est également configuré pour mémoriser le ticket numérique généré. Dans un mode de réalisation particulier, ce premier moyen de génération est configuré de telle manière que le ticket numérique comporte un code d'identification unique associé audit au moins un objet numérique sélectionné.

Le serveur de gestion comprend en outre un premier moyen de transmission qui est configuré pour transmettre le ticket numérique à la librairie numérique, la librairie comprenant un deuxième moyen de transmission configuré pour transmettre le ticket numérique au premier utilisateur.

Selon la présente invention, le gestionnaire de bibliothèque numérique comprend un moyen d'activation configuré pour enregistrer et activer le ticket numérique pour permettre l'accès audit au moins un objet numérique.

Avantageusement, le premier moyen de génération est configuré de telle manière que le code d'identification contenu dans le ticket numérique est un code sécurisé tel que défini précédemment.

Avantageusement, le premier moyen de génération est configuré de telle manière que le code d'identification comporte une donnée d'activation qui contient une information relative à un droit d'utilisation dudit au moins un objet numérique sélectionné.

Selon une variante de réalisation avantageuse, le serveur de gestion comporte un deuxième moyen de génération qui est configuré pour générer une donnée de droit de lecture personnel ; cette donnée de droit de lecture personnel contient au moins une information relative au droit de lecture dudit au moins un objet numérique sélectionné. Dans un mode de réalisation particulier, le deuxième moyen de génération est également configuré pour mémoriser la donnée de droit de lecture personnel.

Avantageusement, cette donnée de droit de lecture personnel peut contenir un code alphanumérique de transaction, par exemple un numéro de transaction généré par le serveur de gestion, et éventuellement une information temporelle de transaction (date et éventuellement heure de la transaction).

Dans un mode de réalisation particulier, ledit au moins un objet numérique sélectionné est stocké sur un serveur de distribution d'objets numériques. Dans ce cas, pour accéder à cet objet numérique, le moyen d'activation est configuré pour soumettre le ticket numérique au serveur de gestion pour authentification ; toujours dans ce cas, le serveur de gestion comporte un troisième moyen de transmission qui est configuré pour transmettre au gestionnaire de bibliothèque numérique, en fonction du résultat de l'authentification, la donnée de droit de lecture personnel associée audit au moins un objet numérique sélectionné.

Dans cette variante, l'activation du ticket numérique permet d'obtenir le droit de lecture personnel nécessaire pour accéder audit au moins un objet numérique sélectionné via le serveur de distribution d'objets numériques. En effet, une fois reçue, le gestionnaire de bibliothèque numérique soumet le droit de lecture personnel au serveur de distribution d'objets numériques, et, en fonction de ce droit, l'utilisateur c'est-à-dire le premier ou le deuxième utilisateur peut obtenir auprès du serveur de distribution d'objets numériques le ou les objets numériques sélectionnés en question, en les recevant sur son gestionnaire de bibliothèque numérique, et éventuellement en les téléchargeant à partir de celui-ci.

Dans un mode de réalisation particulier, le gestionnaire de bibliothèque numérique personnelle est un serveur de stockage numérique distant utilisant la technologie dite de « computing cloud ». Avantageusement, ce gestionnaire de bibliothèque numérique personnelle consiste donc en une « cloudothèque » ou un équivalent.

On comprend donc ici que, pour accéder au dit au moins un objet numérique sélectionné, selon la présente invention, l'utilisateur se connecte via son terminal de communication au gestionnaire de bibliothèque numérique personnelle. Cette connexion se fait avantageusement sur Internet via une interface Web.

Ainsi, l'objet de la présente invention, par ses différents aspects fonctionnels et structurels, permet de simplifier les échanges entre les différents acteurs de la chaîne de distribution des objets numériques, et permet l'accès à un ou plusieurs objets numériques par la fourniture d'un ticket numérique.

Un tel accès par un ticket numérique permet d'une part aux consommateurs d'accéder aux objets numériques sans subir les différentes contraintes rencontrées jusqu'à présent dans l'état de la technique décrit précédemment, et permet d'autre part de rendre possible les cadeaux d'objets numériques à destination d'une tierce personne.

L'objet de la présente invention propose ainsi un système permettant les échanges interpersonnels d'objets numériques, ceci malgré la dématérialisation des objets.

L'objet de la présente invention offre la possibilité d'un échange sans intermédiaire, sans connexion simultanée des deux personnes concernées, en masquant le prix d'achat si nécessaire, et en permettant aussi bien un échange synchrone qu'un échange asynchrone.

Il faut également observer comme évoqué précédemment que le premier utilisateur peut conserver le ticket numérique à ses fins pour un accès strictement personnel aux objets sélectionnés.

D'autres caractéristiques et avantages de la présente invention ressortiront de la description ci-dessous, en référence aux figures 1 à 2 annexées qui en illustrent un exemple de réalisation dépourvu de tout caractère limitatif et sur lesquelles :
- la figure 1 représente de façon schématique un système de fourniture d'un ticket numérique permettant l'accès à au moins un objet numérique selon un exemple de réalisation avantageux de la présente invention ; et
- la figure 2 représente de façon schématique un organigramme illustrant le procédé de fourniture d'un ticket numérique pour l'accès à au moins un objet numérique selon un exemple de réalisation avantageux de la présente invention.

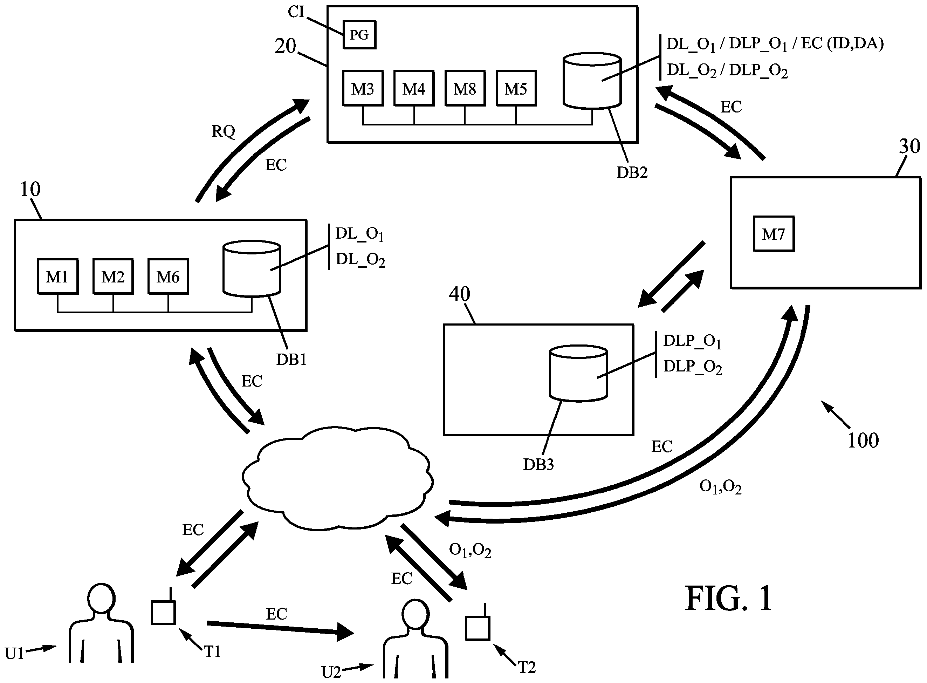

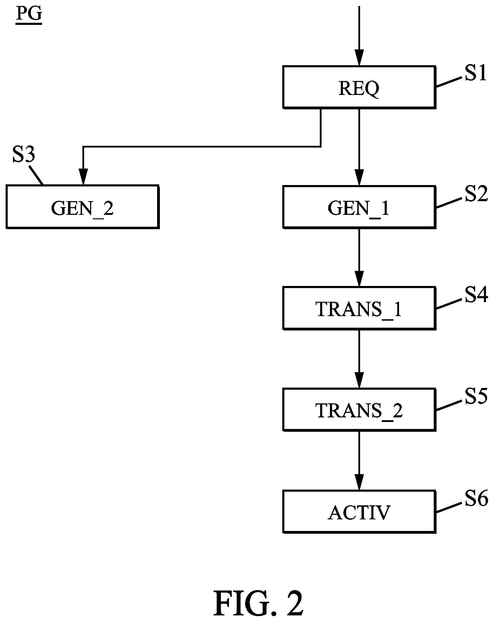

Un système et un procédé de fourniture d'un ticket numérique permettant l'accès au contenu d'au moins un objet numérique, conformes à un exemple de réalisation avantageux de la présente invention, vont maintenant être décrits dans ce qui suit en faisant référence conjointement aux figures 1 à 2.

Pour rappel, permettre l'accès et la consultation d'au moins un objet numérique pour un utilisateur final en évitant les différents inconvénients identifiés précédemment est un des objectifs de la présente invention.

De plus, permettre à une personne d'offrir à une tierce personne un ou plusieurs objets numériques est également un des autres objectifs de la présente invention.

De façon plus générale, l'objet de la présente invention est de développer et d'enrichir l'offre proposée dans la chaîne de distribution des objets numériques.

A cet effet, l'objet de la présente invention propose un système de distribution «global» dont l'architecture comprend au moins une librairie numérique 10 (dite e-librairie), un serveur de gestion 20 (également connu sous le nom « NewCo »), au moins un gestionnaire de bibliothèque numérique personnelle 30, et au moins un système de distribution d'objets numériques 40 (dit e-distributeur). Selon ce système, le serveur de gestion 20 est configuré pour communiquer avec tous les acteurs de cette chaîne.

Dans l'exemple de réalisation décrit ici, ce système de distribution « global » consiste en un système de fourniture 100 d'un ticket numérique EC, également connu sous le nom « Code Ticket ». Ce ticket numérique EC est à la base du concept sous-jacent à la présente invention : ce ticket numérique EC permet des actes de consommation tels que le cadeau d'objets numériques.

Dans l'exemple de réalisation décrit ici, un premier utilisateur U1 souhaite donc offrir à un deuxième utilisateur U2 un objet numérique O1 (et/ou O2). L'objet numérique O1 (et/ou O2) consiste par exemple en un livre numérique. On comprend toutefois ici que l'objet numérique O1 (et/ou O2) peut être tout autre type d'objet numérique tel que ceux mentionnés précédemment : musique, application, vidéo, logiciel, etc.

Dans l'exemple décrit ici, le premier utilisateur U1 sélectionne par l'intermédiaire d'un premier terminal de communication T1 et d'un moyen de sélection M1 de la librairie numérique 10 l'objet numérique O1 (et/ou O2) parmi les objets numériques O1 et O2. Cette sélection se fait directement auprès de la librairie 10 par Internet via une interface Web sur son terminal T1.

Cette étape de sélection peut être accompagnée d'une étape de transaction financière au cours de laquelle le premier utilisateur U1 procède au paiement de l'objet numérique O1 (et/ou O2) sélectionné auprès de la librairie numérique 10. Cette étape de transaction financière, non représentée ici, peut être réalisée par tout moyen de paiement adapté à cet effet (compte du type « Paypal », carte bancaire, prélèvement sur facture mobile, prélèvement sur compte bancaire, etc.).

Dans l'exemple décrit ici, cette sélection est caractéristique de la présente invention. En effet, contrairement aux autres systèmes proposés dans l'état de la technique, cette sélection ne consiste pas à sélectionner directement l'objet numérique O1 (et/ou O2) en tant que tel, mais consiste à ne sélectionner qu'une donnée contenant une information relative à cet objet O1 (et/ou O2). A titre d'exemple non limitatif, une telle donnée peut contenir une information telle que par exemple une information relative au titre, et/ou à l'auteur, et/ou à la date d'édition, et/ou relative à une image ou tout autre donnée de type métadonnée.

Plus précisément, dans l'exemple de réalisation décrit ici, la librairie numérique 10 contient une première base de données DB1 stockant des données qui contiennent chacune une information relative respectivement aux objets numériques O1 et O2 : ces données d'identification sont ici des données de droits de lecture DL_O1 et DL_O2 qui contiennent l'information relative aux droits de lecture des objets numériques O1 et O2.

A titre illustratif, ces droits de lecture DL peuvent comprendre les informations suivantes : {« le chat botté », « Charles Perrault », « Un meunier ne laissa pas tous bien à trois enfants [...] », « 1699 », « .pdf », ...}. Ces droits de lecture sont gérés par les e-distributeurs 40 avec l'accord des éditeurs (non représentés ici).

Dans l'exemple décrit ici, on comprend donc que la librairie numérique 10 contient les données DL_O1 et DL_O2 qui pointent et renvoient respectivement sur les objets numériques correspondants O1 et O2, ces objets numériques O1 et O2 étant eux-mêmes stockés chez un distributeur 40 d'objets numériques sur une troisième base de données DB3.

Cette distinction entre les e-librairies 10 et les e-distributeurs 40 permet notamment de bien distinguer les différents corps de métier des acteurs opérant dans la chaîne de distribution des objets numériques. Grâce à cette distinction, il peut y avoir plusieurs librairies numériques et plusieurs distributeurs d'objets numériques, ce qui permet d'élargir et d'enrichir l'offre à destination des consommateurs finaux.

Les e-librairies 10 sont donc les faces visibles pour le consommateur. Chaque e-librairie 10 présente un catalogue d'objets numériques contenant les métadonnées issues des droits de lecture DL_O1 et DL_O2 associés aux objets O1 et O2.

Les e-distributeurs 40 sont quant à eux chargés de produire les contenus numériques en tant que tels, ceci le plus souvent en partenariat ou en accord avec les éditeurs.

Par souci de clarté, le mode de réalisation décrit ici se limite à un exemple avec une seule librairie numérique 10 (ou e-librairie) et un seul distributeur numérique 40 (ou e-distributeur).

Dans l'exemple décrit ici, le premier utilisateur U1 sélectionne via la librairie numérique 10 uniquement la donnée de droits de lecture DL_O1 (et/ou DL_O2) de l'objet numérique O1 (et/ou O2) qu'il souhaite offrir, et non l'objet numérique O1 (et/ou O2) en tant que tel.

Suite à cette sélection, le procédé selon la présente invention prévoit une étape de soumission S1. Lors de cette étape S1, une requête RQ est émise au serveur de gestion 20 par un moyen de création et de soumission M2.

Dans l'exemple décrit ici, suite à la réception de cette requête RQ, le premier moyen de génération M3 du serveur de gestion 20 génère puis mémorise, lors d'une première étape S2 de génération et de mémorisation, un ticket numérique EC.

Ce ticket numérique EC comporte un code d'identification ID unique associé à l'objet numérique sélectionné O1 (et/ou O2).

Plus précisément, dans l'exemple décrit ici, le code d'identification ID comporte une information relative au droit de lecture DL_O1 (et/ou DL_O2), ou à tout le moins une information qui permet par la suite une corrélation entre le ticket numérique EC et l'objet numérique O1 (et/ou O2) qui a été sélectionné préalablement par le premier utilisateur U1.

Dans l'exemple décrit ici, le ticket numérique EC ne contient aucune information sur l'identité du premier utilisateur U1. Ce premier utilisateur U1 peut donc rester anonyme pour le deuxième utilisateur U2.

Dans l'exemple décrit ici, le code d'identification ID comporte une donnée d'activation DA contenant une information relative à un droit d'utilisation de l'objet numérique O1 (et/ou O2) sélectionné : cette donnée DA contient par exemple une information sur une durée de validité du ticket EC. Passé cette durée, le ticket EC n'est plus valide : un remboursement dans ce cas peut être envisagé.

La présente invention prévoit également une variante non représentée ici au cours de laquelle le droit de lecture peut être prolongé et/ou étendu ; cette prolongation/extension peut se faire par exemple de façon tacite ou sur demande de l'utilisateur (le premier, le deuxième ou tout autre utilisateur). Cette manipulation est dans ce cas réalisée par le biais de la e-librairie 10.

La présente invention prévoit en outre une traçabilité des actes de consommation des objets numériques. Ainsi, en cas de vol, le serveur de gestion 20 peut parfaitement tracer le ticket EC et son utilisation, et mettre en place une procédure de récupération adéquate. L'invention permet donc de supprimer le risque de piratage que l'on aurait avec des échanges de fichiers non sécurisés : elle permet ainsi un niveau de sécurisation équivalent aux systèmes de protection avec DRM (pour « Digital Right Management »).

Dans un mode de réalisation particulier, le ticket numérique EC consiste en un code sécurisé alphanumérique présentant 16 caractères. Dans l'exemple décrit ici, les informations relatives à ce ticket EC sont stockées dans une deuxième base de données DB2.

Dans l'exemple décrit ici, toujours suite à la réception de cette requête RQ, le serveur de gestion 20 comporte un deuxième moyen de génération M5 qui génère et mémorise, lors d'une deuxième étape S3 de génération et de mémorisation, une donnée de droit de lecture personnel DL_O1 (et/ou DLP_O2) contenant au moins une information relative au droit de lecture de l'objet numérique O1 (et/ou O2) sélectionné.

Le serveur de gestion 20 génère la donnée de droit de lecture personnel DLP_O1 (et/ou DLP_O2) en fonction de la donnée de droits de lecture DL_O1 (et/ou DL_O2) de l'objet numérique sélectionné O1 (et/ou O2).

A titre d'exemple, cette donnée dite de « DLP » (pour Droit de Lecture Personnel) se présente sous la forme suivante: DLP = DL + { « librairie X», «date d'achat = 18/11/2011 », « droits d'utilisation = DA »}.

La donnée de droit de lecture personnel peut également contenir un numéro de transaction interne au système, correspondant à un numéro de commande/transaction généré par le serveur de gestion et permettant d'identifier de façon unique la transaction/sélection de l'objet numérique concernée.

Dans l'exemple décrit ici, la donnée de droit personnel est stockée dans une deuxième base de données DB2 en association avec le ticket EC.

Parallèlement à cette étape S3, le serveur de gestion 20 comporte un premier moyen de transmission M4 qui permet l'exécution d'une première étape de transmission S4 au cours de laquelle le ticket numérique EC est transmis jusqu'à la librairie numérique 10.

Ce ticket numérique EC est ensuite renvoyé (automatiquement) au premier utilisateur U1 par un deuxième moyen de transmission M6. Ce renvoi peut s'effectuer par exemple sous la forme d'un SMS ou d'un mail.

On peut également prévoir une variante selon laquelle le code d'identification ID contenu dans le ticket numérique EC est transmis au premier utilisateur U1 sous la forme d'un support papier, par voie postale par exemple.

On comprend donc ici que le ticket numérique EC est cessible. Aussi, de façon caractéristique, le procédé selon la présente invention comporte une deuxième étape de transmission S5 au cours de laquelle le premier utilisateur U1 transmet le ticket numérique EC à un deuxième utilisateur U2.

Cette deuxième transmission S5 matérialise l'acte de cadeau en tant que tel.

Grâce à la génération d'un ticket numérique EC et à sa transmission par le premier utilisateur U1 au deuxième utilisateur U2, la librairie auprès duquel l'objet numérique est sélectionné ne connaît pas l'utilisateur final. Selon un mode de réalisation particulier, il est envisageable que l'utilisateur U1 achète un ou plusieurs objets numériques sans connaître a priori l'utilisateur U2 auquel il va le transmettre : le procédé et le système selon cette variante peuvent donc être utilisés pour une loterie.

De façon plus générale, la transmission du ticket numérique EC se fait sous la forme par exemple d'un mail ou d'un SMS. Cette transmission du ticket numérique EC peut en outre comporter les informations indiquant le mode opératoire pour que le porteur de ce ticket accède à l'objet numérique O1 (et/ou O2) sélectionné ainsi qu'éventuellement un rappel de l'offre.

Cette transmission peut également se matérialiser par la génération et l'envoi d'un pli postal dans lequel le code d'identification ID est donné.

Permettre au deuxième utilisateur U2 l'accès au contenu de l'objet numérique O1 (et/ou O2) est un des objectifs de la présente invention.

Pour ce faire, le deuxième utilisateur U2 doit bien évidemment avoir accès préalablement à un gestionnaire de bibliothèque numérique 30 personnelle, ceci peut lui être rappelé dans la transmission comme indiqué ci-dessus.

Grâce au moyen d'activation M7 de ce gestionnaire 30, le deuxième utilisateur U2 peut lors d'une étape d'activation S6 enregistrer et activer le ticket numérique EC pour déclencher l'accès à l'objet numérique O1 (et/ou O2).

Plus précisément, dans l'exemple décrit ici, le moyen d'activation M7 soumet le ticket numérique EC au serveur de gestion 20. Le serveur de gestion 20 authentifie alors le ticket numérique EC par exemple en vérifiant la validité de la donnée d'activation DA.

Ensuite, le serveur de gestion 20 comporte un troisième moyen de transmission M8 qui, en fonction du résultat de l'authentification, transmet au gestionnaire de bibliothèque numérique 30 la donnée de droit de lecture personnel DL_O1 (et/ou DLP_O2) associée à l'objet numérique O1 (et/ou O2) sélectionné. C'est cette transmission de la donnée de droit de lecture personnel DLP_O1 (et/ou DLP_O2) qui permet l'accès à l'objet numérique O1 (et/ou O2) sélectionné.

En effet, le gestionnaire de bibliothèque numérique 30 qui reçoit cette donnée DLP_O1 (et/ou DLP_O2) interroge le serveur de distribution d'objets numériques 40, qui lui renvoie alors l'objet numérique O1 (et/ou O2) sélectionné.

Ainsi, le deuxième utilisateur U2 peut consulter l'objet numérique O1 (et/ou O2) offert par le premier utilisateur U1 via son deuxième équipement de lecture numérique T2, ce deuxième équipement de lecture étant par exemple un « Smartphone », un ordinateur portable ou encore une liseuse numérique. Bien évidemment, tous autres équipements de lecture numérique peuvent être envisagés dans le cadre de la présente invention.

Dans un exemple de réalisation non représenté ici, la sélection de l'objet numérique mentionné précédemment peut se faire de façon physique directement dans un point de vente, par exemple chez un libraire ou dans tout autre commerce de détail (supermarché, hypermarché, etc.), faisant parti de la chaîne de distribution selon l'invention. Dans ce cas, le premier utilisateur n'a pas besoin de terminal de communication. Néanmoins, le point de vente doit être équipé d'un terminal de communication de type PC apte à se connecter au serveur de gestion à travers un réseau de communication.

Selon cette variante, le point de vente doit, lors une étape de configuration, s'enregistrer auprès du serveur de gestion, et une clé de signature est délivrée par le serveur de gestion au point de vente.

Dans ce cas, lorsqu'un premier utilisateur sélectionne auprès du point de vente un objet numérique (livre numérique ou autre à offrir), un terminal de communication du point de vente envoie une requête de sélection de l'objet numérique correspondant au serveur de gestion. Le terminal de communication peut être en libre service, c'est-à-dire apte à être utilisé directement par l'utilisateur U1, ou bien réservé à un commerçant ou un personnel du point de vente.

La requête est signée à l'aide de la clé du point de vente afin de permettre au serveur de gestion d'authentifier le point de vente. Le point de vente peut ensuite imprimer un document sur lequel le ticket numérique généré est imprimé. Ce document peut être remis en mains propres au premier utilisateur U1 qui peut le remettre ensuite au deuxième utilisateur U2 comme expliqué précédemment.

En tout état de cause, la consultation de l'objet numérique offert O1 (et/ou O2) peut se faire indifféremment soit par exemple par téléchargement soit par exemple par « streaming ».

Cette succession d'étapes techniques est gérée par un programme d'ordinateur PG qui comporte des instructions adaptées pour l'exécution des étapes du procédé décrit ci-dessus et qui est contenu sur un support d'enregistrement CI.

Ainsi, le système de fourniture 100 selon la présente invention offre la possibilité de s'abstraire au moins partiellement des droits de lecture personnels dans un modèle ouvert avec au moins 3 acteurs pour permettre un élargissement des actes de consommation en permettant des actes d'achat à destination d'une tierce personne : achat du type cadeau ou prêt, le tout en offrant un niveau de sécurisation équivalent aux fichiers de DRM.

Il devra être observé que cette description détaillée porte sur un exemple de réalisation particulier de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

## Revendications

1. Procédé de fourniture d'un ticket numérique (EC) permettant l'accès à au moins un objet numérique (O1, O2), ledit procédé comportant les étapes suivantes :
- suite à une sélection par un premier utilisateur (U1) d'au moins une donnée de droits de lecture (DL_O1, DL_O2) associée à un objet numérique (O1, O2) auprès d'une librairie numérique (10) par l'intermédiaire d'un terminal de communication (T1), une étape de soumission (S1) d'une requête (RQ) auprès d'un serveur de gestion (20) pour obtenir un ticket numérique (EC)
- une première étape (S2) de génération au cours de laquelle ledit serveur de gestion (20) génère ledit ticket numérique (EC) comportant un code d'identification (ID) unique associé à ladite au moins une donnée de droits de lecture sélectionnée (DL_O1, DL_O2), ledit ticket (EC) étant généré de manière à ce que ledit code d'identification (ID) comporte une donnée d'activation (DA) contenant une information relative à un droit d'utilisation dudit au moins un objet numérique (O1, O2),
- une deuxième étape (S3) de génération par le serveur de gestion (20) d'une donnée de droit de lecture personnel (DLP_O1, DLP_O2) en fonction de ladite au moins une donnée de droits de lecture sélectionnée (DL_O1, DL_O2), ladite donnée de droit de lecture personnel (DLP_O1, DLP_O2) contenant au moins une information relative au droit de lecture dudit au moins un objet numérique (O1, O2),
- une première étape (S4) de transmission dudit ticket numérique (EC) au premier utilisateur (U1) via la librairie numérique (10),
- une étape d'activation (S6) du ticket numérique (EC) auprès d'un gestionnaire de bibliothèque numérique (30) au cours de laquelle :
a) ledit gestionnaire de bibliothèque numérique (30) transmet ledit ticket numérique (EC) audit serveur de gestion (20) pour une authentification
b) le serveur de gestion (20) vérifie la donnée d'activation (DA) en vérifiant l'information relative au droit d'utilisation dudit au moins un objet numérique (O1, O2) pour activer ledit ticket numérique (EC), puis
c) après authentification et activation du ticket numérique (EC), le serveur de gestion (20) transmet au gestionnaire de bibliothèque numérique (30) ledit droit de lecture personnel associé (DLP_01, DLP_02) audit au moins un objet numérique (O1, O2) pour permettre l'accès audit au moins un objet numérique (O1, O2).

2. Procédé selon la revendication 1, le ticket numérique (EC) étant cessible, **caractérisé en ce qu'**il comporte une deuxième étape de transmission (S5) au cours de laquelle le premier utilisateur (U1) transmet le ticket numérique (EC) à un deuxième utilisateur (U2).

3. Procédé selon la revendication 1 ou 2, ledit au moins un objet numérique (O1, O2) étant stocké sur un serveur de distribution (40) d'objets numériques, **caractérisé en ce que**, lors de l'étape d'activation (S6), le serveur de gestion (20) renvoie au gestionnaire de bibliothèque numérique (30) la donnée de droit de lecture personnel (DLP_O1, DLP_O2) associée audit au moins un objet numérique (O1, O2) pour permettre l'accès audit au moins un objet numérique (O1, O2) via le serveur de distribution (40) d'objets numériques.

4. Programme d'ordinateur (PG) comportant des instructions adaptées pour l'exécution des étapes du procédé selon l'une quelconque des revendications 1 à 3 lorsque ledit programme d'ordinateur (PG) est exécuté par un ordinateur.

5. Support d'enregistrement (CI) lisible par un ordinateur sur lequel est enregistré un programme d'ordinateur (PG) comprenant des instructions pour l'exécution des étapes du procédé selon l'une quelconque des revendications 1 à 3.

6. Système de fourniture (100) d'un ticket numérique (EC) permettant l'accès à au moins un objet numérique (O1, O2), ledit système (100) comportant au moins une librairie numérique (10), un serveur de gestion (20), et un gestionnaire de bibliothèque numérique (30),
a) la librairie numérique (10) comprenant :
- un moyen de sélection (M1) configuré pour permettre la sélection par un premier utilisateur (U1) d'au moins une donnée de droits de lecture (DL_O1, DL_O2) associée à un objet numérique (O1, O2) par l'intermédiaire d'un terminal de communication (T1),
- un moyen de création et de soumission (M2) de requête configuré pour permettre la création puis la soumission d'une requête (RQ) auprès du serveur de gestion (20),
b) le serveur de gestion (20) comprenant :
- un premier moyen de génération (M3) configuré pour générer un ticket numérique (EC) comportant un code d'identification (ID) unique associé à ladite au moins une donnée de droits de lecture sélectionnée (DL_O1, DL_O2), ledit ticket numérique (EC) étant généré de manière à ce que ledit code d'identification (ID) comporte une donnée d'activation (DA) contenant une information relative à un droit d'utilisation dudit au moins un objet numérique (O1, O2),
- un deuxième moyen (M5) de génération d'une donnée de droit de lecture personnel (DLP_O1, DLP_O2) en fonction de ladite au moins une donnée de droits de lecture sélectionnée (DL_O1, DL_O2), ladite donnée de droit de lecture personnel (DLP_O1, DLP_O2) contenant au moins une information relative au droit de lecture dudit au moins un objet numérique (O1, O2),
- un premier moyen de transmission (M4) configuré pour transmettre ledit ticket numérique (EC) à la librairie numérique (10), la librairie numérique (10) comprenant un deuxième moyen de transmission (M6) configuré pour transmettre ledit ticket numérique (EC) au premier utilisateur (U1), et
c) le gestionnaire de bibliothèque numérique (30) comprenant :
- un moyen d'activation (M7) configuré pour activer le ticket numérique (EC) en soumettant au serveur de gestion (20) ledit ticket numérique (EC), dans lequel ledit serveur de gestion (20) est configuré :
1) pour vérifier la validité de la donnée d'activation (DA) en vérifiant l'information relative au droit d'utilisation dudit au moins un objet numérique (O1, O2) pour activer le ticket numérique (EC), et
2) après authentification et activation dudit ticket, pour transmettre au gestionnaire de bibliothèque numérique (30) le droit de lecture personnel (DLP_01, DLP_02) associé audit au moins un objet numérique (O1, O2) pour permettre l'accès audit au moins un objet numérique (O1, O2).

7. Système selon la revendication 6, ledit au moins un objet numérique (O1, O2) étant stocké sur un serveur de distribution (40) d'objets numériques, **caractérisé en ce que** le serveur de gestion (20) comporte un troisième moyen de transmission (M8) configuré pour transmettre la donnée de droit de lecture personnel (DLP_O1, DLP_O2) associée audit au moins un objet numérique (O1, O2) au gestionnaire de bibliothèque numériques (30) pour permettre l'accès audit au moins un objet numérique (O1, O2) via le serveur de distribution d'objets numériques (40).

## Patentansprüche

1. Verfahren zum Liefern eines digitalen Tickets (EC), das den Zugang zu wenigstens einem digitalen Objekt (O1, O2) ermöglicht, wobei das Verfahren die folgenden Schritte umfasst:
- nach einer Auswahl durch einen ersten Anwender (U1) wenigstens einer Dateneinheit (DL_O1, DL_O2) eines Leserechts, die einem digitalen Objekt (O1, O2) zugeordnet ist, bei einer digitalen Bibliothek (10) über ein Kommunikationsendgerät (T1), einen Schritt des Vorlegens (S1) einer Anforderung (RQ) bei einem Steuerungsserver (20), um ein digitales Ticket (EC) zu erhalten;
- einen ersten Erzeugungsschritt (S2), währenddessen der Steuerungsserver (20) das digitale Ticket (EC) erzeugt, das einen eindeutigen Kennungscode (ID) enthält, der der wenigstens einen ausgewählten Dateneinheit (DL_O1, DL_O2) eines Leserechts zugeordnet ist, wobei das Ticket (EC) in der Weise erzeugt wird, dass der Kennungscode (ID) eine Aktivierungsdateneinheit (DA) enthält, die Informationen bezüglich eines Rechts zur Nutzung des wenigstens einen digitalen Objekts (O1, O2) enthält,
- einen zweiten Schritt (S3) zum Erzeugen durch den Steuerungsserver (20) einer Dateneinheit (DLP_O1, DLP_O2) eines persönlichen Leserechts als Funktion der wenigstens einen ausgewählten Dateneinheit (DL_O1, DL_O2) eines Leserechts, wobei die Dateneinheit (DLP_O1, DLP_O2) eines persönlichen Leserechts wenigstens Informationen bezüglich des Leserechts für das wenigstens eine digitale Objekt (O1, O2) enthält,
- einen ersten Schritt (S4) des Sendens des digitalen Tickets (EC) zu dem ersten Anwender (U1) über die digitale Bibliothek (10),
- einen Schritt (S6) des Aktivierens des digitalen Tickets (EC) bei einem Manager (30) der digitalen Bibliothek, in dessen Verlauf:
a) der Manager (30) der digitalen Bibliothek das digitale Ticket (EC) an den Steuerungsserver (20) für eine Authentifizierung sendet,
b) der Steuerungsserver (20) die Aktivierungsdateneinheit (DA) durch Verifizieren der Informationen bezüglich des Nutzungsrechts des wenigstens einen digitalen Objekts (O1, O2) verifiziert, um das digitale Ticket (EC) zu aktivieren, dann
c) nach der Authentifizierung und Aktivierung des digitalen Tickets (EC) der Steuerungsserver (20) an den Manager (30) der digitalen Bibliothek das persönliche Leserecht (DLP_O1, DLP_O2) an das wenigstens eine digitale Objekt (O1, O2) sendet, um den Zugang zu den wenigstens einen digitalen Objekt (O1, O2) zu ermöglichen.

2. Verfahren nach Anspruch 1, wobei das digitale Ticket (EC) enden kann, **dadurch gekennzeichnet, dass** es einen zweiten Sendeschritt (S5) umfasst, in dessen Verlauf der erste Anwender (U1) das digitale Ticket (EC) an einen zweiten Anwender (U2) sendet.

3. Verfahren nach Anspruch 1 oder 2, wobei das wenigstens eine digitale Objekt (O1, O2) in einem Server (40) zum Verteilen digitaler Objekte gespeichert ist, **dadurch gekennzeichnet, dass** während des Aktivierungsschrittes (S6) der Steuerungsserver (20) an den Manager (30) der digitalen Bibliothek die Dateneinheit (DLP_O1, DLP_O2) eines persönlichen Leserechts, die dem wenigstens einen digitalen Objekt (O1, O2) zugeordnet ist, schickt, um den Zugang zu dem wenigstens einen digitalen Objekt (O1, O2) über den Server (40) zum Verteilen digitaler Objekte zu ermöglichen.

4. Computerprogramm (PG), das Befehle enthält, die dafür ausgelegt sind, die Schritte des Verfahrens nach einem der Ansprüche 1 bis 3 auszuführen, wenn das Computerprogramm (PG) von einem Computer abgearbeitet wird.

5. Aufzeichnungsträger (CI), der von einem Computer gelesen werden kann, auf dem ein Computerprogramm (PG) aufgezeichnet ist, das Befehle enthält, um die Schritte des Verfahrens nach einem der Ansprüche 1 bis 3 auszuführen.

6. System (100) zum Liefern eines digitalen Tickets (EC), das den Zugang zu wenigstens einem digitalen Objekt (O1, O2) ermöglicht, wobei das System (100) wenigstens eine digitale Bibliothek (10), einen Steuerungsserver (20) und einen Manager (30) der digitalen Bibliothek umfasst,
a) wobei die digitale Bibliothek (10) Folgendes umfasst:
- ein Auswahlmittel (M1), das konfiguriert ist, die Auswahl durch einen ersten Anwender (U1) wenigstens eine Dateneinheit (DL_O1, DL_O2) eines Leserechts, die einem digitalen Objekt (O1, O2) zugeordnet ist, über ein Kommunikationsendgerät (T1) zu ermöglichen,
- ein Mittel (M2) zum Erzeugen und Vorlegen eine Anforderung, das konfiguriert ist, dass Erzeugen und dann das Vorlegen einer Anforderung (RQ) bei dem Steuerungsserver (20) zu ermöglichen,
b) wobei der Steuerungsserver (20) Folgendes umfasst:
- ein erstes Erzeugungsmittel (M3), das konfiguriert ist, ein digitales Ticket (EC) zu erzeugen, das einen eindeutigen Kennungscode (ID) enthält, der der wenigstens einen ausgewählten Dateneinheit (DL_O1, DL_O2) eines Leserechts zugeordnet ist, wobei das digitale Ticket (GC) in der Weise erzeugt wird, dass der Kennungscode (ID) eine Aktivierungsdateneinheit (DA) aufweist, die Informationen bezüglich eines Nutzungsrechts des wenigstens einen digitalen Objekts (O1, O2) enthält,
- ein zweites Mittel (M5) zum Erzeugen einer Dateneinheit (DLP_O1, DLP_O2) eines persönlichen Leserechts als Funktion der wenigstens einen ausgewählten Dateneinheit (DL_O1, DL_O2) eines Leserechts, wobei die Dateneinheit (DLP_O1, DLP_O2) eines persönlichen Leserechts wenigstens Informationen bezüglich des Leserechts des wenigstens einen digitalen Objekts (O1, O2) enthält,
- ein erstes Sendemittel (M4), das konfiguriert ist, das digitale Ticket (EC) zu der digitalen Bibliothek (10) zu senden, wobei die digitale Bibliothek (10) ein zweites Sendemittel (M6) enthält, das konfiguriert ist, das digitale Ticket (EC) zu dem ersten Anwender (U1) zusenden, und
c) wobei der Manager (30) der digitalen Bibliothek Folgendes umfasst:
- ein Aktivierungsmittel (M7), das konfiguriert ist, das digitale Ticket (PC) zu aktivieren, indem es das digitale Ticket (PC) dem Steuerungsserver (20) vorlegt, wobei der Steuerungsserver (20) konfiguriert ist:
1) die Gültigkeit der Aktivierungsdateneinheit (DA) durch Verifizieren der Informationen bezüglich des Nutzungsrechts des wenigstens einen digitalen Objekts (O1, O2) zu verifizieren, um das digitale Ticket (EC) zu aktivieren, und
2) nach der Authentifizierung und Aktivierung des Tickets das persönliche Leserecht (DLP_O1, DLP_O2), das dem wenigstens einen digitalen Objekt (O1, O2) zugeordnet ist, an den Manager (30) der digitalen Bibliothek zu senden, um den Zugang zu dem wenigstens einen digitalen Objekt (O1, O2) zu ermöglichen.

7. System nach Anspruch 6, wobei das wenigstens eine digitale Objekt (O1, O2) in einem Server (40) zum Verteilen digitaler Objekte gespeichert ist, **dadurch gekennzeichnet, dass** der Steuerungsserver (20) ein drittes Sendemittel (M8) enthält, das konfiguriert ist, die Dateneinheit (DLP_O1, DLP_O2) eines persönlichen Leserechts, die dem wenigstens einen digitalen Objekt (O1, O2) zugeordnet ist, an den Manager (30) der digitalen Bibliothek zusenden, um den Zugang zu dem wenigstens einen digitalen Objekt (O1, O2) über den Server (40) zum Verteilen digitaler Objekte zu ermöglichen.

## Claims

1. Method for providing a digital ticket (EC) allowing access to at least one digital object (O1, O2), said method comprising the following steps:
- subsequent to a selection by a first user (U1) of at least one read rights datum (DL_01, DL 02) associated with a digital object (O1, O2) at a digital library (10) by way of a communication terminal (T1), a step (S1) of submitting a request (RQ) to a management server (20) to obtain a digital ticket (EC)
- a first generating step (S2) in the course of which said management server (20) generates said digital ticket (EC) comprising a unique identification code (ID) associated with said at least one selected read rights datum (DL_01, DL_02), said ticket (EC) being generated in such a way that said identification code (ID) comprises an activation datum (DA) containing an information item relating to a right of use of said at least one digital object (O1, O2),
- a second step (S3) of generating by the management server (20) a personal read right datum (DLP_O1, DLP_O2) as a function of said at least one selected read rights datum (DL_O1, DL_O2), said personal read right datum (DLP_O1, DLP_O2) containing at least one information item relating to the read right in respect of said at least one digital object (O1, O2),
- a first step (S4) of transmitting said digital ticket (EC) to the first user (U1) via the digital library (10), and
- an activation step (S6) of activating the digital ticket (EC) at a digital library manager (30), in the course of which:
a) said digital library manager (30) transmits said digital ticket (EC) to said management server (20) for authentication
b) the management server (20) verifies the activation datum (DA) by verifying the information item relating to the right of use of said at least one digital object (O1, O2) so as to activate said digital ticket (EC), then
c) after authentication and activation of the digital ticket (EC), the management server (20) transmits said personal read right (DLP_01, DLP_02) associated with said at least one digital object (O1, O2) to the digital library manager (30) so as to allow access to said at least one digital object (O1, O2).

2. Method according to Claim 1, the digital ticket (EC) being assignable, **characterized in that** it comprises a second transmission step (S5) in the course of which the first user (U1) transmits the digital ticket (EC) to a second user (U2).

3. Method according to Claim 1 or 2, said at least one digital object (O1, O2) being stored on a digital objects distribution server (40), **characterized in that**, during the activation step (S6), the management server (20) returns the personal read right datum (DLP_01, DLP_02) associated with said at least one digital object (O1, O2) to the digital library manager (30) so as to allow access to said at least one digital object (O1, O2) via the digital objects distribution server (40).

4. Computer program (PG) comprising instructions adapted for the execution of the steps of the method according to any one of Claims 1 to 3 when said computer program (PG) is executed by a computer.

5. Recording medium (CI) readable by a computer on which is recorded a computer program (PG) comprising instructions for the execution of the steps of the method according to any one of Claims 1 to 3.

6. System (100) for providing a digital ticket (EC) allowing access to at least one digital object (O1, O2), said system (100) comprising at least one digital library (10), a management server (20), and a digital library manager (30),
a) the digital library (10) comprising:
- a selection means (M1) configured to allow the selection by a first user (U1) of at least one read rights datum (DL_O1, DL_O2) associated with a digital object (O1, O2) by way of a communication terminal (T1),
- a request creation and submission means (M2) configured to allow the creation then the submission of a request (RQ) to the management server (20),
b) the management server (20) comprising:
- a first generating means (M3) configured to generate a digital ticket (EC) comprising a unique identification code (ID) associated with said at least one selected read rights datum (DL_O1, DL_O2), said digital ticket (EC) being generated in such a way that said identification code (ID) comprises an activation datum (DA) containing an information item relating to a right of use of said at least one digital object (O1, O2),
- a second means (M5) for generating a personal read right datum (DLP_O1, DLP_O2) as a function of said of at least one selected read rights datum (DL_O1, DL_O2), said personal read right datum (DLP_O1, DLP_O2) containing at least one information item relating to the read right in respect of said at least one digital object (O1, O2),
- a first transmission means (M4) configured to transmit said digital ticket (EC) to the digital library (10), the digital library (10) comprising a second transmission means (M6) configured to transmit said digital ticket (EC) to the first user (U1), and
c) the digital library manager (30) comprising:
- an activation means (M7) configured to activate the digital ticket (EC) by submitting said digital ticket (EC) to the management server (20), in which said management server (20) is configured:
1) to verify the validity of the activation datum (DA) by verifying the information item relating to the right of use of said at least one digital object (O1, O2) so as to activate the digital ticket (EC), and
2) after authentication and activation of said ticket, to transmit the personal read right (DLP_01, DLP_02) associated with said at least one digital object (O1, O2) to the digital library manager (30) so as to allow access to said at least one digital object (O1, O2).

7. System according to Claim 6, said at least one digital object (O1, O2) being stored on a digital objects distribution server (40), **characterized in that** the management server (20) comprises a third transmission means (M8) configured to transmit the personal read right datum (DLP_01, DLP_02) associated with said at least one digital object (O1, O2) to the digital library manager (30)so as to allow access to said at least one digital object (O1, O2) via the digital objects distribution server (40).
